# EUROPEAN PATENT APPLICATION

(11) **EP 0 848 925 A1**
(43) Date of publication of application: **24.06.1998**
(21) Application number: 97203920.0
(22) Date of filing: 15.12.1997
(51) Int. Cl.: A47J 31/40

(54) **A container for powders, granules and the like**

(30) Priority: 17.12.1996 IT MI962639
(71) Applicant: Premark International Holdings B.V., 3447 Woerden (NL)
(72) Inventor: Rinaldi, Roberto, 40013 Castel Maggiore, Bologna (IT)
(74) Representative: Perani, Aurelio

(57) **Abstract**

A container (100) for powders and granules, particularly for association with a machine for preparing and dispensing instant beverages, has a base (101) in which there is an outlet opening (103) communicating with a powder extraction and metering device (105) associated with the container. A screw element (118) extending inside the container substantially in alignment with the outlet opening (103) is supported for rotation so as to be movable axially away from and towards a travel limit position in which it is advanced relative to the outlet opening (103), the screw element (118) being held in this position by a predetermined load. Drive means (124, 125) rotate the screw element (118) in a sense such as to favour the transportation of the powders or granules towards the outlet opening (103) when the screw element (118) is in the advanced travel limit position, permitting accurate and uniform filling of the extraction and metering device (105).

## Description

The present invention relates to a container for powders, granules and the like, particularly for association with a machine for preparing and dispensing instant beverages, having an outlet opening communicating with a powder extraction and metering device associated with the container.

In the present description, the expression "powders, granules and the like" means any solid, water-soluble substance suitable for consumption which can be dissolved and diluted in water or in water-based compositions in the liquid state or as mixtures, in order to produce a beverage.

The use of machines for preparing and dispensing instant beverages such as automatic vending machines or dispensers for use in the commercial field for selling refreshments to the public is known. In these machines, the beverages are preferably prepared by the rehydration of solid, water-soluble substances suitable for consumption, such as dry extracts and/or flavouring powders or granules, since these have considerable advantages from the point of view of the quality and taste of the beverages produced in comparison with those prepared by the dilution of syrups or liquid flavourings.

In fact, as a result of the hot processes which they undergo during their preparation, these solid, water-soluble substances suitable for consumption are substantially free of bacteria and other microbiological organisms and their organoleptic characteristics thus remain unchanged for much longer than those of liquid flavourings and syrups. Moreover, during the prolonged exposure to air to which the dry extracts and flavouring powders are subjected inside the machine before use, the absence of water prevents the occurrence of oxidative processes which, although of limited extent, certainly cause great changes in the final taste of the beverage. In this connection, it is borne in mind that it is impossible to keep coffee in the liquid state for several days, owing to the speed with which the aforesaid oxidative processes, which are responsible for changes in taste, take place therein.

As stated, the aforementioned instant beverage machines have one or more containers or bins, each having an extraction and metering device for withdrawing and metering from the container the dry extracts or flavouring powders or granules contained therein.

There is a widely felt need for a container for powders and a respective powder extraction and metering device which, whilst being easy to use and to operate, permits accurate and uniform metering of the quantity of dry extracts or flavouring powders or granules withdrawn at any particular time for the preparation of a quantity of beverage substantially equal to one drink. Since the amount of flavouring powder or granules required to prepare a 200 cc beverage is of the order of about ten grams, the extraction and metering device must clearly be sufficiently accurate to permit metering of small quantities of flavouring powders or granules.

To satisfy the aforementioned requirement, containers each having an Archimedean screw extractor positioned in alignment with the outlet opening in its base are generally used. The accuracy of the metering of the quantity of flavouring powder or granules extracted is then ensured by precise control of the number of turns or fractions of a turn of the screw, for example, by a stepping electric motor associated with the screw.

The use of containers of the aforementioned type is not satisfactory, however, because of a series of problems, the main problem being that, with changes in the conditions of use of the container, it is impossible to ensure uniform metering of the flavouring powders or granules extracted therefrom for a given number of turns performed by the screw. In fact, as the quantity of flavouring powder or granules held in the container decreases as a result of the withdrawal of some measures thereof, the extent of filling of the screw is reduced because the flavouring powder or granules in the base of the container are under less and less pressure and are therefore less and less compacted so that a smaller quantity of flavouring powder or granules is transported out of the container for a given number of turns of the screw.

Moreover, to prevent lumps of powder forming inside the container, for example, owing to the presence of moisture, which would make the filling of the screw even more uncertain, it is necessary to provide mechanisms inside the container for breaking up any lumps which form. Clearly, however, the presence of these mechanisms and the need to operate them involves an increase in the cost of the container, as well as making it structurally complex.

It should also be borne in mind that, to promote good filling of the screw even after some measures of flavouring powder or granules have been withdrawn, the containers are formed so as to have a fairly large horizontal cross-section at least in the upper portion so that the load of powdered or granular material bearing on the screw is not halved after the withdrawal of a few measures from the container. As a result, and for reasons of bulk, the number of containers which can be fitted in each instant beverage machine is two or three and the variety of beverages which can be prepared is consequently limited.

The technical problem upon which the present invention is based is that of devising a container for powders, granules and the like which has structural and functional characteristics such as to satisfy the aforementioned requirements and, at the same time, to solve the problems referred to in connection with the containers of the prior art.

This problem is solved by a container for powders, granules and the like of the type specified which is characterized in that it comprises an Archimedean screw element supported for rotation in the container so as to be movable axially away from and towards a travel limit position in which it is advanced relative to the powder extraction and metering device, the screw element being held in the advanced travel limit position by a predetermined load, the container further comprising drive means for rotating the screw element in a sense of rotation such as to favour the transportation of the powders or granules towards the powder extraction and metering device when the screw element is in the advanced travel limit position.

Further characteristics and the advantages of the container according to the present invention will become clear from the following description of a preferred embodiment thereof, given by way of non-limiting example with reference to the appended drawings in which:
- Figure 1 is a partially-sectioned, perspective view of a plurality of containers according to the invention arranged side by side,
- Figures 2 and 3 are sections showing a detail of a container of Figure 1 in two different operating conditions,
- Figures 4 and 5 are sections showing a further detail of a container of Figure 1 in two different operating conditions,
- Figure 6 is a partially-sectioned, perspective view of a machine for preparing instant cold beverages comprising the container of Figure 1,
- Figure 7 is a partially-sectioned front view of the machine of Figure 6, and
- Figure 8 is a sectioned side view of the machine of Figure 6.

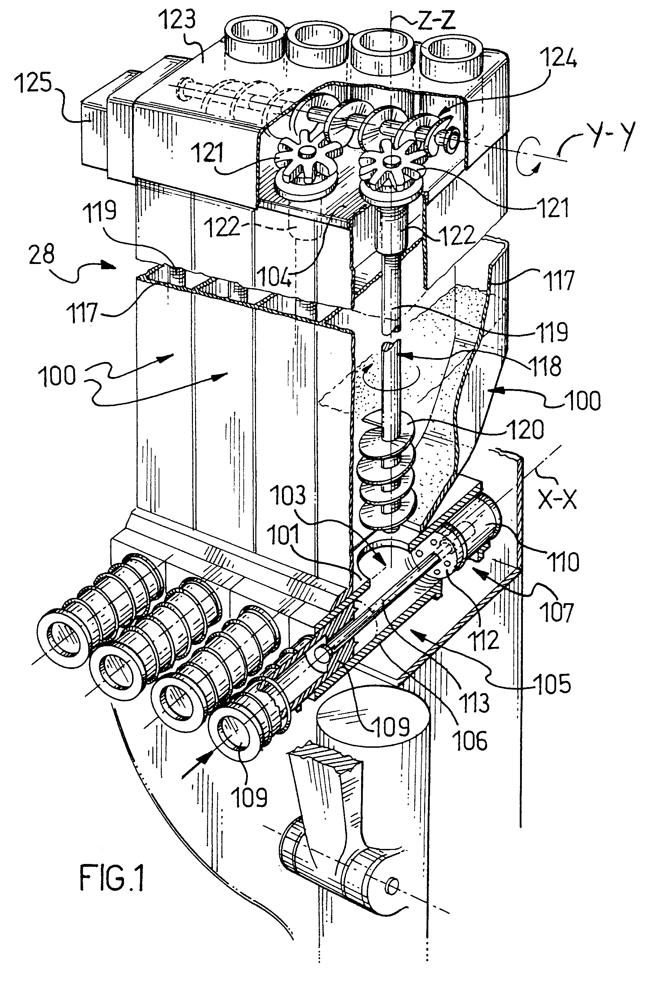

With reference to Figures 1 to 5, a container or bin for dry extracts or flavouring powders or granules is generally indicated 100 and has a horizontal base 101 in which there is an outlet opening 103 and from which side walls 117 extend. At the top, the container 100 has a parallelepipedal portion extending predominantly vertically, closed by a lid 104, and connected to the base 101 by a frusto-conical portion which favours the movement of the powders or granules held in the container 100 towards the outlet opening 103.

An extraction and metering device 105 associated with the lower end of the container 100 enables the dry extracts or flavouring powders or granules held therein to be withdrawn and metered.

In the embodiment described, the extraction and metering device 105 is constituted by a cylindrical body 106 with a predetermined axis X-X arranged in a horizontal plane and hence parallel to the base 101. The cylindrical body 106 is formed integrally with the lower portion of the container 100 and comprises an inlet coinciding with the outlet opening 103 of the container 100, an outlet 107 facing downwards and offset axially from the inlet by a predetermined distance, and opposite ends, of which one is open and the other is closed by an end wall 108.

A first piston 109 and a second piston 110 are fitted end to end for sliding in the cylindrical body 106 from its open end so that the second piston 110 is disposed between the first piston 109 and the end wall 108 of the cylindrical body 106.

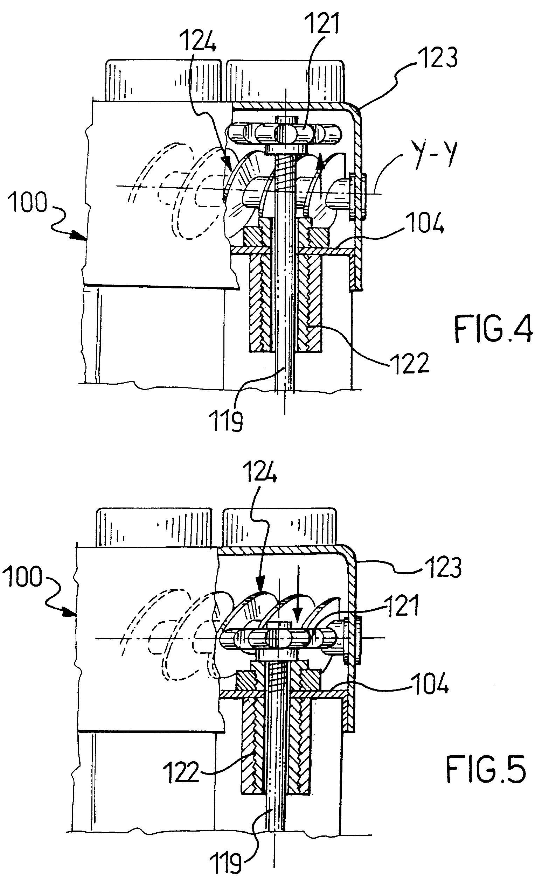

The first piston 109 and the second piston 110 are connected in a manner such that, starting from a condition (Figure 3) in which the head ends 111 and 112 of the first piston 109 and of the second piston 110, respectively, are in contact with one another, a predetermined axial displacement S is permitted between them.

This connection is preferably formed by a rod 113 having one end connected firmly to the head end 112 of the second piston 110 and its opposite end fitted for sliding through the head end 111 in a cavity 114 of the first piston 109. This end of the rod 113 is threaded and a threaded nut 128 is screwed onto it, preventing the rod 113 from coming out of the first piston 109. The cavity 114 extends axially inside the first piston 109 so as to allow the rod 113 to be inserted into the first piston 109 by a distance equal to S (Figure 3).

For reasons which will become clearer from the following description, the outlet 107 of the cylindrical body 106 is positioned in a manner such that the head end 112 of the second piston 110 is positioned adjacent the outlet 107 when the piston is in abutment with the end wall 108 of the cylindrical body 106.

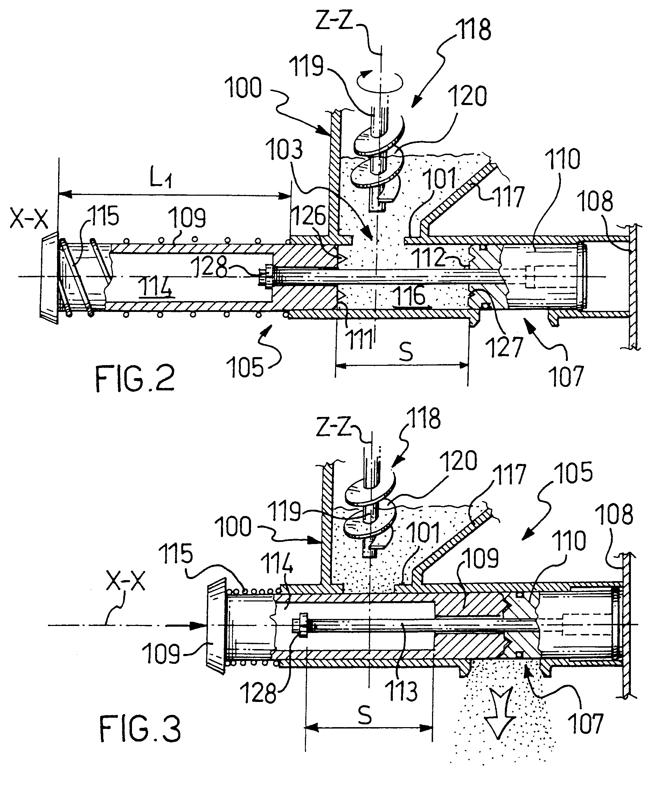

The first piston 109 is movable between a first travel limit position (Figure 2) in which the piston 109 is retracted relative to the outlet opening 103 of the container 100 so as not to obstruct it and a second travel limit position (Figure 3) in which it is inserted in the cylindrical body 106 until it urges the second piston 110 into abutment against the end wall 108 of the cylindrical body 106.

A helical spring 115 acts on the first piston 109 to keep it in the first travel limit position (Figure 2) in the rest condition.

When the first piston 109 is in the first travel limit position and the two pistons are spaced apart by the distance S, a chamber 116 defined between the head ends 111 and 112 of the pistons is in communication with the inlet of the cylindrical body 106 and hence with the outlet opening 103 of the container 100.

As an alternative to the embodiment described above, the extraction and metering device 105 associated with the container 100 may be of the known Archimedean-screw type.

The container 100 comprises an Archimedean screw element 118 which extends perpendicular to the base 101 substantially in alignment with the outlet opening 103 and is supported for rotation inside the container 100 so as to be slidable axially between an advanced travel limit position and a retracted position, relative to the outlet opening 103.

The screw element 118 comprises a shaft 119 which has a circular cross-section, an axis Z-Z, and a predetermined length, starting from the lower end facing the outlet opening 103, to which a helix 120 is fixed so as to form an Archimedean screw. The upper end of the shaft 119 projects from the lid 104 through a corresponding hole therein and a gear 121, keyed coaxially to the screw element 118, prevents it from being inserted fully inside the container 100.

A flanged sleeve 122 is preferably fitted in the hole in the lid 104 from above, the shaft 119 being fitted for sliding and rotating with a predetermined radial clearance in the sleeve 122. The flanged sleeve 122 advantageously guides the shaft 119 of the screw element 118 during the axial movements away from and towards the advanced travel limit position, at the same time allowing it to rotate about its own axis.

A casing 123 associated removably with the top of the container 100 and having a load-bearing structure supports for rotation a worm screw extending in the vicinity of the lid 104 along an axis Y-Y perpendicular to the axis of the shaft 119. The worm screw 124 is disposed at a distance from the axis of the shaft 119 such that, only when the screw element 119 is in the advanced travel limit position, the gear 121 is meshed with the worm screw 124 so as to constitute a worm gear. When the screw element 118 is retracted relative to the outlet opening 103, the gear 121 is no longer meshed with the worm screw 124 (Figure 4).

The worm screw 124 is rotated by an electric motor 125 supported rigidly by the casing 123.

The container 100 can be placed alongside identical containers to form a unit 28 for holding and metering powders, as shown in Figure 1. The containers 100 of the unit 28 for holding and metering powders are independent of one another except for the lid 104, the casing 123, the worm screw 124, and the electric motor 125.

The withdrawal of a measure of flavouring powder from the container 100 is described below with reference to Figures 1 to 5, starting from an initial condition (Figure 1) in which the container is filled with flavouring powder, for example, freeze-dried coffee, the screw element is in the advanced travel limit position, and the chamber 116 defined inside the cylindrical body 106 between the first piston 109 in the first travel limit position and the second piston 110 spaced axially by the distance S, is in communication with the outlet opening 103 of the container 100.

The electric motor 125 rotates the worm screw 124 so that the screw element 118 is rotated, by means of the gear 121, about its own axis Z-Z in a sense such as to transport powder held in the container 100 towards the outlet opening 103 and hence towards the chamber 116 disposed beneath it, favouring complete filling thereof.

Once the chamber 116 is filled, continued rotation of the screw element 118 compacts the powder inside the chamber 116. As the degree of compaction of the power increases, the supply of further powder by the screw element 118 gives rise to an upward thrust on the screw element. Since, as stated, the screw element 118 can slide along its axis Z-Z, clearly, as soon as the aforementioned thrust is such as to overcome the load by which the screw element 118 is held in the advanced travel limit position which, in this case, corresponds to its own weight, the screw element 118 slides upwards. The upward sliding of the screw element 118 stops as soon as the screw element 118 reaches a position in which it is retracted relative to the outlet opening 103 and in which the gear 121 is no longer meshed with the worm screw 124 (Figure 4).

In order to withdraw the powder held in the chamber 116, it then suffices to operate the first piston 109 causing it to slide towards the second travel limit position against the action of the helical spring 115. This first of all brings about simultaneous sliding of the second piston 110 which is pushed by the powder compressed between the two pistons and comes into abutment against the end wall 108 of the cylindrical body 106 and, subsequently, causes the powder held in the chamber 116 to be crumbled and to fall out through the outlet 107 of the cylindrical body 106. The powder is fully discharged from the extraction and metering device 105 when the head end 111 of the first piston 109 is in abutment with the end 112 of the second piston 110.

To favour the crumbling of the powder, the head end 111 of the piston 109 has pointed projections 126 and the head end 112 of the piston 110 has corresponding recesses 127 for housing the projections 126 when the head surfaces 111 and 112 are in contact with one another.

When the first piston 109 is released, the force exerted by the helical spring 115 returns it to the first travel limit position. By virtue of the presence of the connection formed by the rod 113, the return of the first piston 109 towards the first travel limit position takes place first of all by a movement away from the second piston 110 as far as the aforementioned distance S and, subsequently, by a simultaneous movement of the pistons until they have returned to the starting position (Figure 2). As a result, the powder in the container 100 falls through the outlet opening 103 into the underlying chamber 116, at the same time causing lowering of the screw element 118 which is brought back to the advanced travel limit position in which the gear 121 is rotated by the worm screw 124.

After each withdrawal of a measure of powder, the extraction and metering device 105 is refilled with a new measure of powder so as to be ready immediately for a subsequent request for a measure of powder.

The screw element 118 advantageously ensures that the chamber 116 is filled uniformly, entirely irrespective of the level of the powder inside the container 100. The quantity of powder with which the chamber 116 is filled depends on its degree compaction and, clearly, its degree of compaction depends on the load by which the screw element 118 is forced to the advanced travel limit position. In the embodiment described, this load can be varied by suitable ballasting of the screw element 118.

The quantity of powder to be withdrawn upon each operation of the extraction and metering device 105 can also advantageously be metered accurately by regulation of the maximum distance S permitted between the pistons and hence of the volume of the chamber 116, by axial positioning of the threaded nut 128 on the shaft 113.

The casing 123 can easily be removed with the screw elements 118 and the lid 104 to allow the insides of the containers 100 to be cleaned.

It should be stressed that, as well as performing the aforementioned function of ensuring uniform filling of the powder extraction and metering device 105, the screw element 118 can, at the same time, break up any lumps of powder which may form inside the container 100.

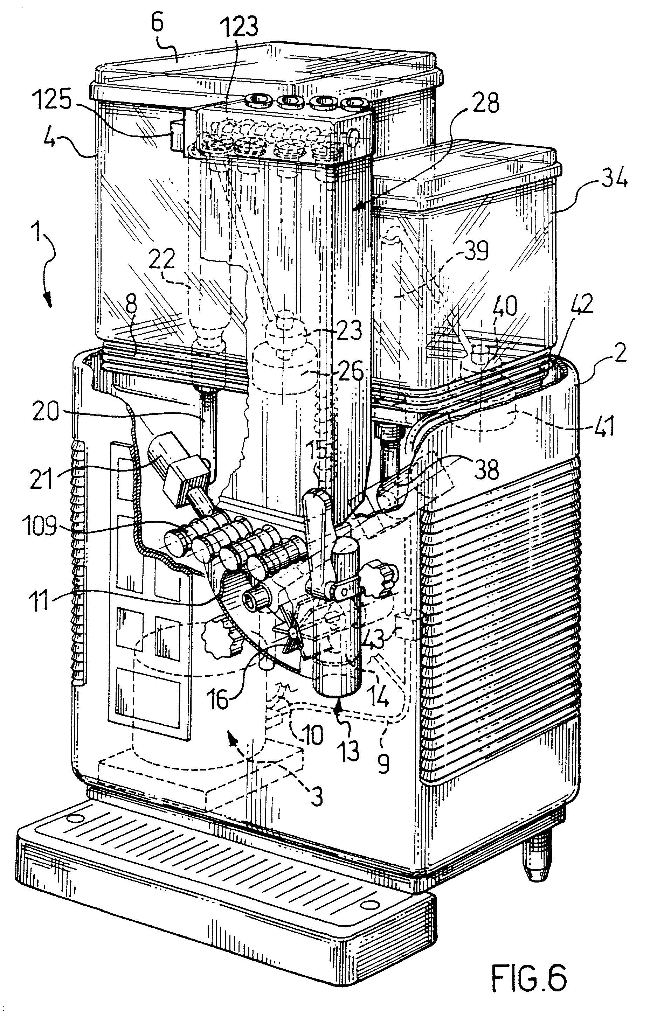

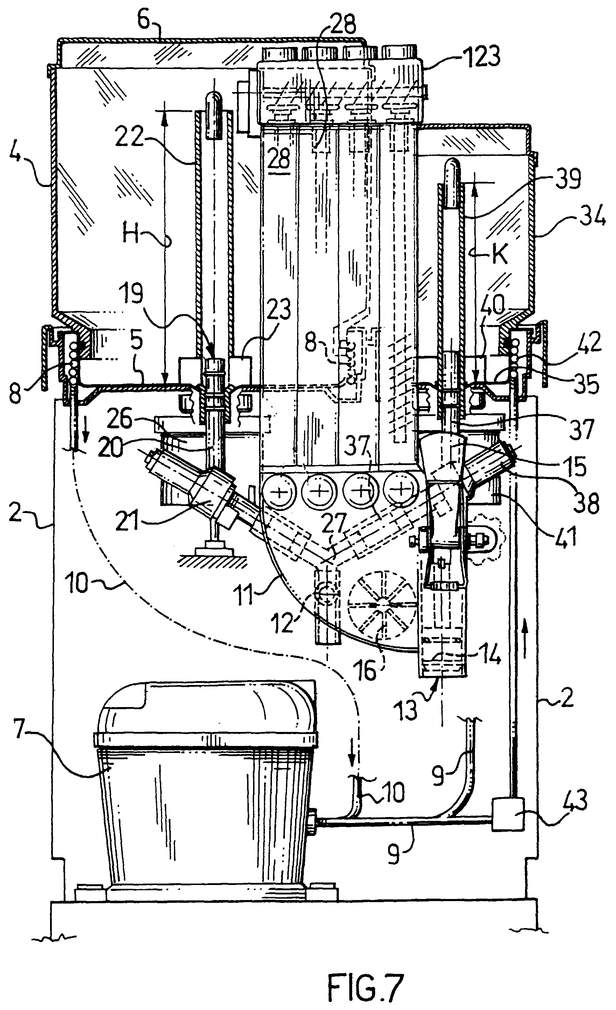

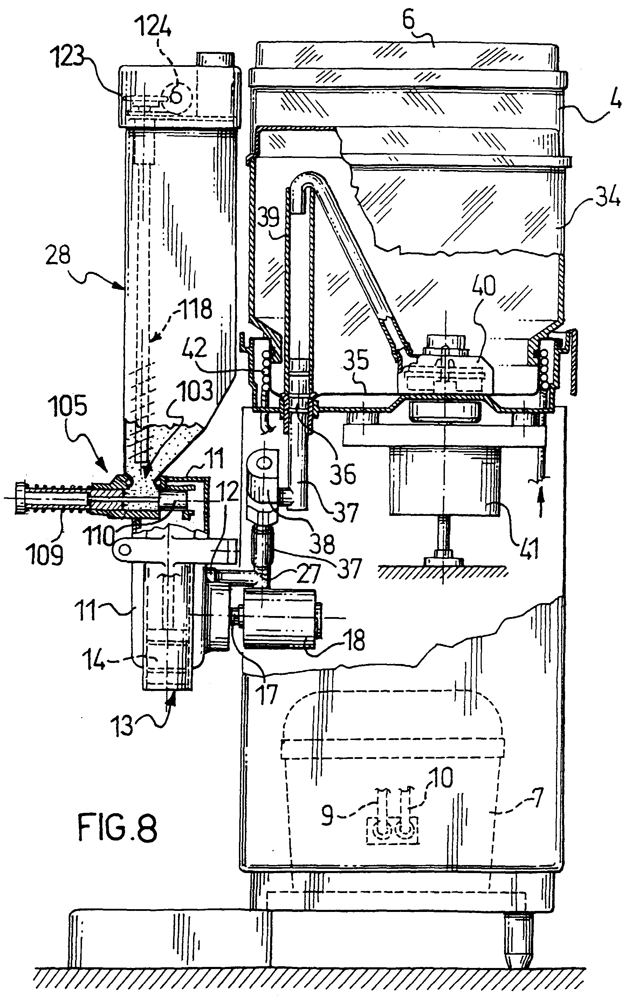

A machine, indicated 1 for preparing an instant cold beverage from a solid water-soluble substance suitable for consumption, such as a dry extract or a flavouring powder is described below with reference also to Figures 6, 7 and 8.

The machine 1 comprises a rigid, substantially parallelepipedal body 2 having the function of a load-bearing structure inside which there is a refrigeration unit 3. A tank 4 for liquids or semi-solid mixtures, supported on top of the body 2, comprises a base 5 and a lid 6. The tank 4 is preferably made of glass or transparent plastics material to enable a user of the machine 1 to check its contents.

The refrigeration unit 3 comprises a motor-driven compressor 7, a condenser for the refrigerant fluid of known type not shown in the drawing for simplicity of representation, disposed on the rear of the body 2, and an evaporator 8 formed by a coil in which the refrigerant fluid expands taking away heat. The motor-driven compressor 7 is in fluid communication with the condenser and with the evaporator 8 by means of respective output and return pipes 9 and 10 for the refrigerant fluid.

The coil of the evaporator 8 is wound around the tank 4 in the vicinity of its base 5.

The machine 1 comprises a collection container 11 fixed to the body 2 externally on the front surface thereof. The collection container 11 is in a lower position than the tank 4. The collection container 11 is preferably constituted by a casing of transparent plastics material above which the body 2 of the machine 1 supports a unit 28 for holding and metering powders, comprising a plurality of containers 100 and respective powder extraction and metering devices 105 of the type described above. In the embodiment described, the unit 28 comprises four containers 100 arranged side by side.

Each outlet opening 107 of the extraction and metering devices 105 is in communication with the collection container 11 in order to discharge the powders extracted from the respective container 100 therein.

The screw elements 118 of the containers 100 are rotated by the motor 125 by means of a single worm screw 124 supported by the casing 123.

The collection container 11 comprises an inlet opening 12 for the admission of liquids and a corresponding outlet opening 13. The outlet opening 13 is positioned in the lower portion of the collection container 11 in order to allow the container be emptied completely, as will become clearer from the following description. A manual on/off valve 14, operated by a lever 15, is associated with the outlet opening 13; alternatively, the valve 14 may be replaced by a solenoid valve.

A bladed stirrer 16 for liquids is fitted inside the collection container 11 and is keyed to one end of a shaft 17 fitted for rotation in the collection container 11, the opposite end of the shaft 17 being fixed for rotation with an electric motor 18 housed inside the body 2.

In the base 5 of the tank 4 there is an outlet opening 19 which is put into fluid communication with the inlet opening 12 of the collection container 11 by means of a pipe 20 in which there is an on/off valve constituted, in the embodiment described, by a solenoid valve indicated 21.

A tubular element 22 open at its opposite ends, extends inside the tank 4 from the base 5 and perpendicular thereto, the upper end of the tubular element 22 being at a predetermined height H above the base 5 and its lower end being sealingly engaged in the outlet opening 19 so as to put the interior of the tubular element 22 into fluid communication with the outlet opening 19. The tank 4 also houses a centrifugal pump 23 positioned in the vicinity of the base 5 and driven by an electric motor 26 outside the tank 4. The centrifugal pump 23 is connected, by means of an output pipe, to the upper end of the tubular element 22 in order to fill the tubular element 22 with the liquid held in the tank 4 and to ensure that the liquid pressure at the outlet opening 19 is equivalent to the piezometric height H and is therefore independent of the level to which the tank 4 is filled.

A second tank 34 for liquids substantially identical to that described above but of smaller dimensions is supported on top of the body 2.

The tank 34 comprises a base 35 in which there is an outlet opening 36 which is put into fluid communication with the inlet opening 12 of the collection container 11 by means of a pipe 37 in which an on/off valve constituted, in the embodiment described, by a solenoid valve indicated 38, is fitted.

As described for the tank 4, the tank 34 comprises a tubular element 39 open at its opposite ends and extending inside the tank from the base 35 and perpendicular thereto, the upper end of the tubular element 39 being at a predetermined height K above the base 35 and the lower end being engaged sealingly in the outlet opening 36 so as to put the inside of the tubular element 39 into fluid communication with the outlet opening. The tank 34 houses a centrifugal pump 40 positioned in the vicinity of the base 35 and driven by an electric motor 41 outside the tank 34. The centrifugal pump 40 is connected, by means of an output pipe, to the upper end of the tubular element 39 in order to fill the tubular element 39 with the liquid held in the tank 34 and to ensure a liquid pressure equivalent to the piezometric height K at the outlet opening 36.

The machine 1 comprises heating means associated with the second tank 34. The heating means preferably comprise a coil 42 which is wound around the tank 34 in the vicinity of its base 35 and in which some of the refrigerant fluid coming out of the motor-driven compressor 7 and directed towards the evaporator 8 can be made to flow. The flow of fluid in the coil 42 is regulated by a solenoid valve 43, the opening of which is controlled by a thermostat associated with the second tank 34.
Alternatively, the heating means may be replaced by equivalent means such as an electrical resistor in which the current is regulated by a thermostat associated with the second tank 34.

The pipes 20 and 37 are preferably connected to the inlet opening 12 of the collection container 11 by means of a multi-way connector 27.

The collection container 11 has an inlet hole and a drain hole, not shown in the drawing for simplicity of representation, through which water is admitted to the collection container 11 and discharged therefrom in order to wash the container upon completion of every operating cycle of the machine 1, as will become clearer from the following description.

The machine 1 further comprises elements such as valves, fluid pipes, electrical circuits, electronic components, switches etc., which are necessary for ensuring the correct operation of the machine 1 and which are not described below in order not to make the present description unnecessarily lengthy, since they are of known type.

As an alternative to the embodiment described above, an instant beverage machine which is simplified in comparison with that described may be produced. In particular, this machine may be without a collection container 11, the beverage in this case being prepared in a glass outside the machine.

The operation of the instant beverage machine 1 in order to produce a predetermined quantity of cold beverage equal to the contents of a glass is described below with reference to the appended drawings, starting from an initial operating condition in which the containers 100 contain dry extracts, flavouring powders or granules, the second tank 34 contains a liquid, for example, water, heated to a temperature of at least 16oC by the refrigerant fluid which flows in the coil 42, and the first tank 4 contains water cooled by the evaporator 8 to a temperature below 4oC, preferably 1.5oC. It should be stressed that the contents of the first tank 4 may be constituted by water-based compositions such as, for example, milk or sugared water cooled to a temperature below 0oC, rather than by water. Moreover, the contents of the first tank may also be a mixture comprising finely dispersed ice so that sorbets or semi-solid beverages containing crushed ice can be prepared by the machine 1.

The operation of the machine 1 is started by a user by the operation of a switch which starts the operating cycle and switches on the electric motor 125 associated with the worm screw 124, and by the subsequent operation of the extraction and metering device 105 associated with the container 100 containing the dry extract or flavouring powder of the desired beverage flavour. A measure of powder or dry extract corresponding to 4÷12% of the final weight of the predetermined quantity of cold beverage to be prepared is thus admitted to the collection container 11.

A switch, for example, a magnetic switch, is preferably associated with each extraction and metering device 105 so that the operation of any one of these devices simultaneously starts the operating cycle of the machine 1.

The bladed stirrer 16 is simultaneously set in rotation by the electric motor 18 and the solenoid valve 38 is opened for sufficient time to enable a quantity of water equal to 10÷25% of the final weight of the predetermined quantity of cold beverage to be prepared to flow into the collection container 11. A concentrated liquid solution in which all of the dry extract or flavouring powder is dissolved is thus formed in the collection container 11.

The solenoid valve 21 is then opened to allow a quantity of cold water to flow into the collection container 11 from the first tank 4 until there is a quantity of liquid equal to the predetermined quantity of cold beverage to be prepared in the collection container 11. The admission of cold water from the first tank 4 cools the above-mentioned liquid solution by dilution, producing the cold beverage. The rotation of the bladed stirrer 16 suitably mixes the cold beverage produced.

The bladed stirrer 16 is then stopped and the cold beverage prepared is dispensed from the collection container 11 through the outlet opening 13 to be received in an glass disposed beneath it, by the opening of the on/off valve 14.

The operating cycle of the machine 1 is concluded by a short cycle for washing the collection container 11, comprising the admission of a jet of washing water from the water mains into the collection container 11 through the aforementioned inlet hole and the subsequent discharge of the washing water from the collection container 11 through its drain hole. During the washing, the bladed stirrer 16 is rotated to allow the whole of the collection container 11 to be washed.

After a few minutes, the electric motor 12 which drives the worm screw is stopped.

Since the piezometric heights H and K of the liquid inside the tanks 4 and 34 at the respective outlet openings 19 and 36 are kept constant, the quantities of liquids admitted to the collection container 11 can be metered by regulation of the times for which the solenoid valves 21 and 38 are open.

The chamber 116 is advantageously filled with a quantity of powder equal to a measure immediately after the discharge of a measure of powder into the collection container 11, during the preparation of the beverage. This eliminates the time necessary for the preparation of a measure of powder from the operating cycle of the machine.
The container 100 and, more particularly, the unit 28 for holding and metering the powders, may also be installed in machines for preparing and dispensing hot beverages.

As can be appreciated from the foregoing description, the container according to the invention solves the technical problem referred to.

An advantage of the container according to the invention lies in the fact that it ensures precise and uniform filling of the extraction and metering device associated therewith entirely irrespective of the quantity and of the level of powders, granules, and the like held in the container.

Another advantage of the container according to the invention lies in its ability to break up lumps which may form inside it.

Another advantage of the container according to the invention lies in the structural and functional simplicity of the container and of its components which therefore have a high degree of reliability in operation.

A further advantage of the container according to the invention lies in the fact that it can be formed so as to extend predominantly vertically and can therefore be disposed alongside identical containers, taking up less space than containers of the prior art. As a result, the container according to the invention is particularly suitable for installation in machines for preparing and dispensing instant beverages.

Naturally, in order to satisfy contingent and specific requirements, an expert in the art may apply to the container for powders, granules and the like according to the present invention many modifications and variations all of which, however, are included in the scope of protection of the invention as defined by the following claims.

Thus, for example, a spring or equivalent resilient means may be provided for acting on the Archimedean screw element in order to urge it towards the advanced travel limit position relative to the outlet opening of the container. This solution is particularly useful if the outlet opening of the container is in a vertical wall and the screw element is arranged horizontally. If the powder extraction and metering device is of the screw type, it may be housed inside the container.

The cylindrical body of the extraction and metering device may be open at both ends, but it is necessary to provide a stop element instead of the end wall to limit the sliding of the second piston.

## Claims

1. A container (100) for powders, granules and the like, particularly for association with a machine (1) for preparing and dispensing instant beverages, of the type comprising an outlet opening (103) communicating with a powder extraction and metering device (105) associated with the container (100), characterized in that it comprises:
- an Archimedean screw element (118) supported for rotation in the container (100) so as to be movable axially away from and towards a travel limit position in which it is advanced relative to the powder extraction and metering device (105), the screw element (118) being held in the advanced travel limit position by a predetermined load, and
- drive means (124, 125) for rotating the screw element (118) in a sense of rotation such as to favour the transportation of the powders or granules towards the powder extraction and metering device (105) when the screw element (118) is in the advanced travel limit position.

2. A container (100) according to Claim 1, in which a gear (121) is keyed coaxially to a portion of the screw element (118) and the drive means comprise a worm screw (124) extending along an axis (Y-Y) substantially perpendicular to the screw element (118) and supported for rotating about its axis, the gear (121) being meshed with the worm screw (124) to constitute a worm gear when the screw element (118) is in the advanced travel limit position.

3. A container (100) according to Claim 1, in which the screw element (118) extends substantially in alignment with the outlet opening (103).

4. A container (100) according to Claim 3, in which the powder-outlet opening (103) is formed in a base wall (101) of the container (100) and the screw element (118) extends perpendicularly above the outlet opening (103).

5. A container (100) according to Claim 1, in which resilient means act on the screw element (118) in order to urge it into the advanced travel limit position.

6. A container (100) according to Claim 1, in which the powder extraction and metering device (105) is associated with the container (100) externally.

7. A container (100) according to Claim 1, in which the powder extraction and metering device (105) is of the piston type.

8. A container (100) according to Claim 7, in which the extraction and metering device (105) comprises a cylindrical body (106) having an inlet communicating with the outlet opening (103) of the container (100) and an outlet (107) which is offset axially relative to the inlet, a first piston (109) and a second piston (110) being fitted end to end inside the cylindrical body (106), the first piston (109) being operable from the exterior and the second piston (110) being connected axially to the first piston (109) by connection means (113, 114, 128) which permit a predetermined relative movement between the pistons, the first piston (109) being movable between a first travel limit position in which the two pistons are spaced apart to define between the pistons a chamber (116) communicating with the inlet of the cylindrical body and a second travel limit position in which the first piston is in contact with the second piston (110) in order to urge it into abutment against a travel stop (108) whilst the contacting end surfaces (111, 112) of the first and second pistons are in the region of the outlet (107) of the cylindrical body (106).

9. A container (100) according to Claim 1, in which the powder extraction and metering device (105) is of the Archimedean-screw type.

10. A machine (1) for preparing a predetermined quantity of an instant beverage substantially equal to one drink, characterized in that it comprises at least one container (100) for powders, granules and the like according to any one of the preceding claims.
